# EUROPEAN PATENT SPECIFICATION

(11) **EP 3 741 983 B1**
(45) Date of publication and mention of the grant of the patent: **03.05.2023**
(21) Application number: 19207062.1
(22) Date of filing: 05.11.2019
(51) Int. Cl.: F02M 21/02, F02M 33/02, F02M 33/08, F02M 37/20, F02M 37/00

(54) **HIGH PRESSURE FUEL PUMP**
HOCHDRUCKKRAFTSTOFFPUMPE
POMPE À CARBURANT HAUTE PRESSION

(30) Priority: 22.05.2019 KR 20190060284; 17.09.2019 KR 20190114135
(43) Date of publication of application: 25.11.2020
(73) Proprietor: Motonic Corporation, Seoul 03142 (KR)
(72) Inventor: JEON, Wan Jae, 42702 Daegu (KR); LEE, Jun Hyeok, 42702 Daegu (KR); PARK, Yong Deok, 42702 Daegu (KR); KIM, Dae Yong, 42702 Daegu (KR); KIM, Dong Sub, 42702 Daegu (KR)
(74) Representative: Müller Verweyen

(56) References cited:
- DE-A1-102017 210 630
- KR-A- 20120 064 817
- KR-A- 20170 048 279
- KR-B1- 101 182 130
- KR-B1- 101 182 130
- KR-B1- 101 199 321

## Description

### 1. Field of the Invention

The present invention relates to a liquid petroleum direct injection (LPDI) system, and more particularly, to a high pressure fuel pump for driving an engine by discharging liquid fuel stored in a fuel tank at high pressure and injecting the liquid fuel into a cylinder, and an LPDI system including the same.

### 2. Description of the Related Art

In general, unlike a mechanical LPG fuel system that relies on pressure of a fuel tank, a liquid petroleum direct injection (LPDI) system installs a high pressure fuel pump on a fuel supply line and drives an engine by injecting liquid fuel, which is discharged at high pressure by the high pressure fuel pump, into a cylinder using an injector.

The LPDI system has the effects of improving power performance of a vehicle, improving fuel efficiency by reducing fuel consumption, and reducing an amount of carbon emission.

For example, the applicant of the present invention has disclosed and filed patent applications for an LPDI system and configuration of a high pressure fuel pump applied thereto as shown in Patent Documents 1 to 3 below.

Since the LPDI system uses LPG fuel, vaporization and compression of the LPG fuel may occur in the process of using the LPG fuel due to the property of the LPG fuel. This phenomenon is called 'vapor lock'.

The vapor lock phenomenon is known to occur because liquid and gaseous fuels coexist on a fuel line due to residual heat of an engine compartment when the engine is turned off after driving.

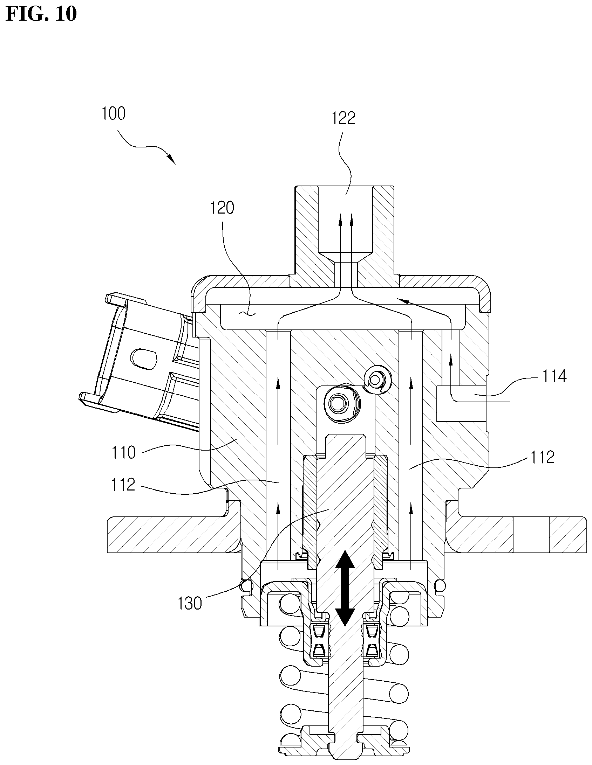

FIG. 10 is a sectional view of a high pressure fuel pump applied to an LPDI system according to a related art.

As shown in FIG. 10, low pressure fuel, which is supplied to a fuel recovery line 122 via a low pressure portion 120 provided at an upper portion of a body 110, may cool a piston 130 by passing through a pair of cooling passages 112 connected to upper and lower portions of a high pressure fuel pump 100 through the volume change of the piston 130 generated when the high pressure fuel pump 100 is driven and the piston 130 moves up and down. In this case, the low pressure fuel introduced through a low pressure fuel inlet 114 is directly introduced into the low pressure portion 120 and then supplied through the fuel recovery line 122.

For this reason, there is a problem that an adverse effect may be caused on the cooling rate of the piston 120 because the flow rate of fuel may vary depending on the drive RPM of the high pressure fuel pump 100.

Meanwhile, the vapor lock phenomenon occurring in the LPDI system of the related art may become a cause of deterioration of startability at the next start after the vehicle has been driven and turned off.

The vapor lock phenomenon may occur at various positions of a fuel supply system, and the vapor lock phenomenon occurring at the high pressure portion may cause a problem.

In particular, the vapor lock phenomenon occurring in a closed space such as a high pressure fuel pump and a delivery pipe is not easy to solve due to the characteristics of high pressure devices, and thus it is difficult to improve startability.

For example, when the vapor lock phenomenon occurs in the high pressure fuel pump applied to the LPDI system of the related art, liquid and gaseous fuels coexist at an upper end of the high pressure fuel pump.

That is, according to the high pressure fuel pump of the related art, a cover is formed in a planar shape by reducing a volume for fuel circulation and pulsation reduction such that the volume is optimized at the time of fuel return, so the vapor inside the cover is not completely eliminated at the time of restarting and fuel circulation, but partially remains inside the cover.

In addition, the high pressure fuel pump according to the related art has a problem in that main components may be worn during driving due to low lubrication caused by the characteristics of the LPG fuel.

### [Related Documents]

### [Patent Document]

(Patent Document 1) Korean Patent Registration No. 10-1975824 (issued on April 30, 2019)
(Patent Document 2) Korean Patent Registration No. 10-1987458 (issued on June 3, 2019)
(Patent Document 3) Korean Unexamined Patent Publication No. 10-2014-0106764 (published on September 4, 2014)
(Patent Document 4) Korean Patent KR20120064817 A
(Patent Document 5) German Patent DE 102017210630 A1

### SUMMARY OF THE INVENTION

In order to solve the problems occurring in the related art, an object of the present invention is to provide a high pressure fuel pump and a liquid petroleum direct injection (LPDI) system including the same, capable of improving startability at the time of restarting by collecting vapor generated due to heat of an engine after driving a vehicle.

Another object of the present invention is to provide a high pressure fuel pump and an LPDI system including the same, capable of preventing components from being worn caused by the characteristics of LPG fuel.

Still another object of the present invention is to provide a high pressure fuel pump and an LPDI system including the same, capable of cooling a piston at a constant rate by circulating low pressure fuel supplied from a fuel tank to a cooling passage provided inside the high pressure fuel pump at constant pressure and flow rate.

In order to achieve the objects as described above, the present invention provides a high pressure fuel pump according to claim 1.

According to the high pressure fuel pump of the present invention, a cover is formed in a convex dome shape so that gaseous fuel can be collected in an inside of the cover, and the collected gaseous fuel can be returned to a fuel tank at the time of restarting an engine.

According to the present invention, restartability can be improved by collecting gaseous fuel, that is, vaporized fuel generated due to heat of an engine when the engine is turned off after driving, and delivering the vaporized fuel into a fuel tank upon restarting.

In addition, according to the present invention, when a damper portion is provided at an upper portion of a body, a portion of an upper surface of a cover is formed as an inclined surface to collect gaseous fuel, which is vaporized by heat of an engine inside the cover, and the collected gaseous fuel is recovered to a fuel tank when the engine is restarted so that vapor inside the high pressure fuel pump can be easily eliminated.

Further, according to the present invention, it is possible to prevent main components from being worn upon driving of a high pressure fuel pump due to low lubrication caused by the characteristics of LPG fuel.

In addition, according to the present invention, a piston can be cooled always at a constant rate by circulating low pressure fuel, which is supplied from a fuel tank, at constant pressure and flow rate through a cooling passage provided inside a high pressure fuel pump, so the piston can be smoothly operated, thereby ensuring high reliability.

Further, according to the present invention, compatibility can be improved by applying a high pressure fuel pump to an LPDI system.

### BRIEF DESCRIPTION OF THE DRAWINGS

FIG. 1 is a block diagram showing a configuration of an LPDI system including a high pressure fuel pump according to an exemplary embodiment of the present invention.
FIG. 2 is a perspective view showing a high pressure fuel pump according to an embodiment of the present invention.
FIG. 3 is a sectional view taken along line A-A' of FIG. 2.
FIG. 4 is a sectional view taken along line B-B' of FIG. 2.
FIG. 5 is a partially enlarged sectional view of a high pressure fuel pump according to a comparative example.
FIG. 6 is a sectional view of a high pressure fuel pump shown in FIG. 5.
FIG. 7 is a view showing an operation state of a high pressure fuel pump shown in FIG. 5.
FIG. 8 is a sectional view showing a cover and a damper portion of a high pressure fuel pump.
FIG. 9 is an exploded perspective view of a cover and a damper portion shown in FIG. 8.
FIG. 10 is a sectional view of a high pressure fuel pump applied to an LPDI system according to a related art.

### DETAILED DESCRIPTION OF THE INVENTION

Hereinafter, a high pressure fuel pump and a liquid petroleum direct injection (LPDI) system including the same according to an exemplary embodiment of the present invention will be described in detail with reference to the accompanying drawings.

In the following description, the terms indicating directions such as 'left', 'right', 'front', 'backward', 'upward' and 'downward' are defined as indicating respective directions based on the state shown in the drawings.

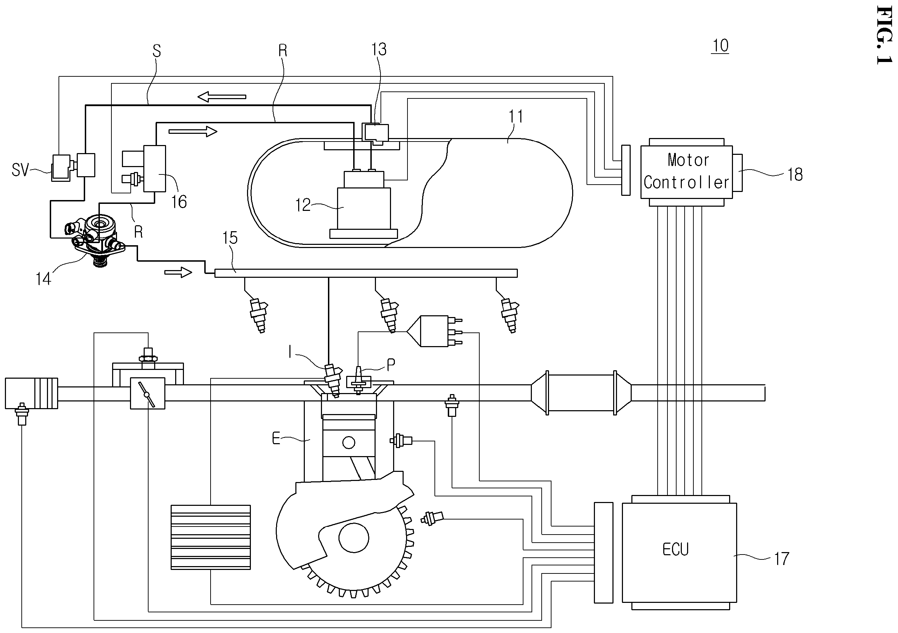

First, the configuration of the LPDI system including the high pressure fuel pump according to the exemplary embodiment of the present invention will be described with reference to FIG. 1.

FIG. 1 is a block diagram showing the configuration of an LPDI system including the high pressure fuel pump according to an exemplary embodiment of the present invention.

In the present embodiment, fuel supplied through a fuel supply line S by the pumping operation of a fuel pump 12 at the start of an engine is initially delivered to a high pressure fuel pump 14 at a constant pressure, for example, a pressure of Δ5 bar, and the fuel pressure supplied at the initial stage of the start is called a 'low pressure'.

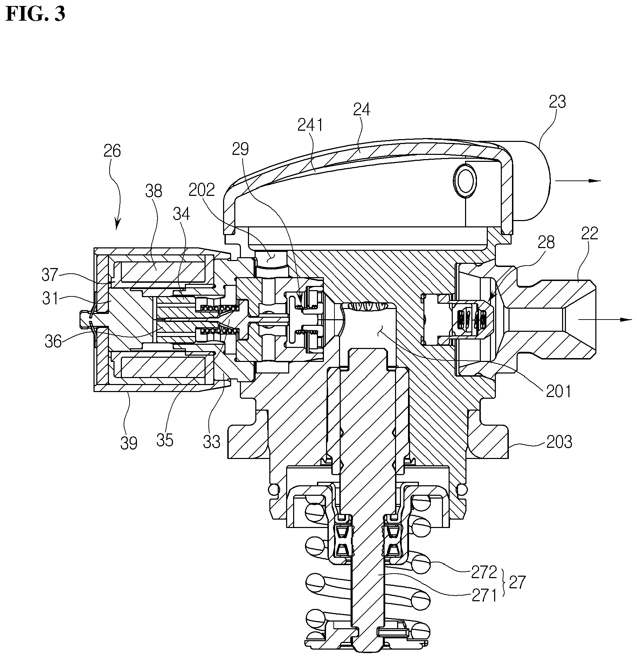

In addition, a transfer path for transferring low pressure LPG fuel from an intake port of the high pressure fuel pump 14 to a fuel recovery line R through a recovery port is referred to as a 'low pressure portion 202 (see FIG. 3)'.

As shown in FIG. 1, the LPDI system 10 according to the exemplary embodiment of the present invention may include a fuel tank 11 in which the fuel is stored, the fuel pump 12 installed in the fuel tank 11 to pump the fuel, the fuel supply line S for supplying the fuel pumped from the fuel pump 12 to an engine E, the high pressure fuel pump 14 for pressurizing the fuel pumped by the fuel pump 12 to a high pressure, a fuel recovery line R for recovering a portion of the fuel supplied to the high pressure fuel pump 14 from the low pressure portion 202 of the high pressure fuel pump 14 to the fuel tank 11, a delivery pipe 15 in which the fuel pressurized by the high pressure fuel pump 14 is filled at a high pressure, an injector I for directly injecting the fuel, which is filled in the delivery pipe 15 at a high pressure, to a combustion chamber of the engine E, an electronic control unit (17, hereinafter referred to as ECU) for generating control signals to control the driving of a motor inside the fuel pump 12 and the injector I based on the target RPM of the engine E, and a motor controller 18 for controlling the driving of the motor according to the control signal of the ECU 17.

A shut-off valve, which is opened or closed according to the driving signal of the motor controller 18 based on the control signal of the ECU 17 to shut off the fuel supplied from the fuel tank 11, may be installed at a front end of the high pressure fuel pump 14 of the fuel supply line S and a fuel pressure regulator 16, which reduces the pressure of the fuel recovered from the low pressure portion 202 of the high pressure fuel pump 14 to the fuel tank 11, may be installed at a rear end of the high pressure fuel pump 14 of the fuel recovery line R.

The fuel pump 12 pumps the LPG fuel stored in the fuel tank 11 to supply the fuel to the fuel supply line S. In this case, the fuel supplied through the fuel supply line S is initially delivered to the high pressure fuel pump 14 in a low pressure state, for example, a pressure of about Δ5 bar.

The high pressure fuel pump 14 may pressurize a portion of the fuel, which is pumped by the fuel pump 12 and supplied through the fuel supply line S at a low pressure, such that a portion of the fuel has a high pressure, for example, about 40 bar to 150 bar. Then, the high pressure fuel pump 14 may supply a portion of the fuel to the delivery pipe 15 and recover the remaining fuel from the low pressure portion 202 to the fuel tank 11 through the fuel recovery line R.

Meanwhile, first and second pressure sensors (not shown) may be installed at a front end of the high pressure fuel pump 14 of the fuel supply line S and a rear end of the high pressure fuel pump 14 of the fuel recovery line R, respectively, to detect the pressure of the fuel that is moved, and a third pressure sensor (not shown) may be installed on the delivery pipe 15.

Thus, the ECU 17 may generate the control signals to allow the motor controller 18 to control the driving of the shut-off valve SV, the fuel pump 12, a multi-valve 13 and the fuel pressure regulator 16 according to the fuel pressure detected from the first and second pressure sensors and the third pressure sensor installed on the delivery pipe 15.

In addition, the LPDI system 10 including the high pressure fuel pump according to the exemplary embodiment of the present invention may further include a cut-off valve (not shown).

The cut-off valve may open or close the fuel recovery line R according to the control signal of the ECU 17. For example, the cut-off valve may be configured as a solenoid valve. Such a cut-off valve may be operated to close the fuel recovery line R for a predetermined time if an ignition key is operated at the start of the engine. Therefore, the fuel recovered to the fuel tank 11 may be temporally cut-off by closing the cut-off valve during the start of the engine, so that the pressure of the fuel supplied to the high pressure fuel pump 14 through the fuel supply line S by the pumping operation of the fuel pump 12 can be increased, thereby compressing the vaporized fuel inside the fuel supply line S.

Accordingly, the high pressure fuel pump 14 may stably receive the fuel, and supply the fuel to the injector I through the delivery pipe 15 by pressurizing all of the supplied fuel to a predetermined high pressure.

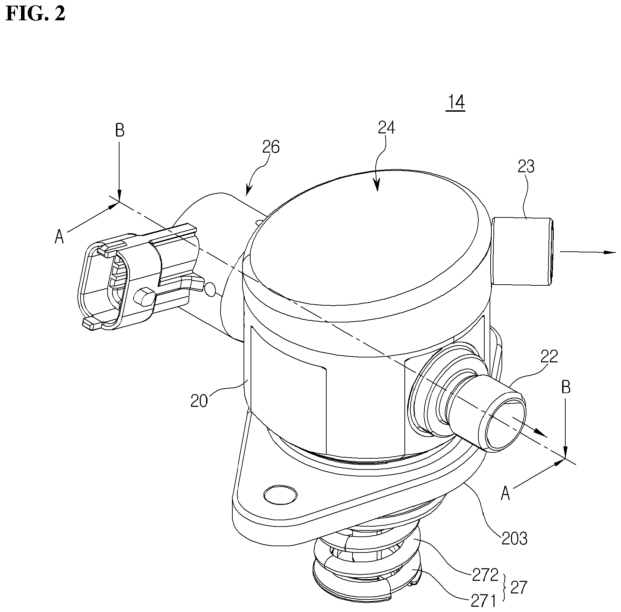

Next, the configuration of the high pressure fuel pump according to an embodiment of the present invention will be described in detail with reference to FIGS. 2 to 4.

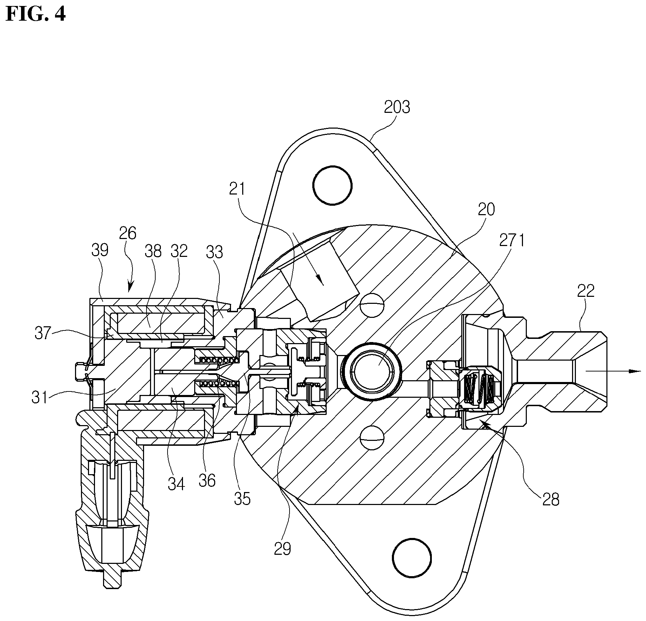

FIG. 2 is a perspective view showing a high pressure fuel pump according to the embodiment of the present invention, FIG. 3 is a sectional view taken along line A-A' of FIG. 2, and FIG. 4 is a sectional view taken along line B-B' of FIG. 2.

As shown in FIGS. 2 to 4, the high pressure fuel pump 14 according to the embodiment of the present invention includes a body 20 formed at a lateral side thereof with an intake port 21 and an exhaust port 22, and provided therein with a pressing device 27 configured to press a portion of fuel, which is supplied through the intake port 21, at a high pressure, a spill valve 26 coupled to one side of the body 20 to control a supply flow rate and exhaust pressure of the fuel, and a cover 24 coupled to an upper portion of the body 20 and having a recovery port 23 for recovering a portion of the fuel supplied into the body to a fuel tank 11.

In addition, the high pressure fuel pump 14 may further include a roller tappet (not shown) installed between the body 20 and a cam of an engine camshaft (not shown) to convert a rotational motion of the cam into a linear reciprocating motion and transmit the linear reciprocating motion to the pressing device 27.

A space in which the pressing device 27 is installed is formed may be formed at a lower portion of the body 20, and the intake port 21 and the exhaust port 22 may be formed at the lateral side of the body 20.

The fuel introduced into the body 20 through the intake port 21 may be transferred to the low pressure portion 202 provided at an upper portion and an inner portion of the body 20 and the recovery port 23 formed in the cover 24.

That is, the low pressure portion 202 may serve as a movement passage for the fuel, which is connected to a high pressure portion 201 through the intake port 21, the spill valve 26 and an upper space of the body 20, the inlet 21, the spill valve 26, and the upper space of the body 20, and the high pressure portion 201 may serve as a movement passage for the fuel, which connects an upper portion of the pressing device 27 to the exhaust port 22.

A bracket 203 may be coupled to an outer peripheral surface of the body 20 to fix the body 20 to a vehicle body.

The pressing device 27 may generate suction force and pressing force for the fuel in the body 20.

To this end, as shown in FIG. 3, the pressing device 27 may include a piston 271 connected to the camshaft of the engine via the roller tappet to move up and down and a return spring 272 coupled to the piston 271 to provide a restoring force.

As shown in FIG. 3, the pressing device 27 may constitute the high pressure portion 201 together with the body 20. The high pressure portion 201 may be a space in which a portion of the fuel is pressurized and may function as a movement passage through which the pressurized fuel moves. That is, the high pressure portion 201 may be formed on a passage through which a portion of the pressurized fuel introduced into the intake port 21 is supplied to the exhaust port 22, and may be formed at an upper portion of the piston 271 of the pressing device 27.

Meanwhile, when a portion of the fuel is vaporized in an inner space of the high pressure portion 201, a micro pipe (not shown) for discharging the vaporized fuel to the low pressure portion 202 may be formed between the high pressure portion 201 defined by the pressing device 27 and the body 20 and the low pressure portion 202 formed inside the body 20.

The cover 24 is coupled to the upper portion of the body 20 to shield an upper surface of the body 20, and have a function of collecting the gaseous fuel, which is obtained as liquid-phase fuel is vaporized into gas-phase fuel by the heat of the engine when the engine is turned off after driving.

To this end, the cover 24 has a dome shape which is convex upward such that a space for collecting the gaseous fuel is provided in the cover 24.

In detail, the upper surface of the cover 24 is configured as an inclined surface inclined downward to the left in a direction opposite to the recovery port 23 when viewed from FIG. 3.

Therefore, the fuel vaporized by the heat of the engine, that is, the gaseous fuel may move to an upper portion of the liquid-phase fuel due to the difference in specific gravity. That is, the gaseous fuel may be collected in the upper portion of the inner space of the cover 24 along the inclined surface in the inner space of the cover 24, and may be recovered to the fuel tank 11 through the recovery port 23 when the engine is restarted.

As described above, according to the present invention, the cover has the dome shape which is convex upward so that the gaseous fuel inside the cover may be collected, and the collected gaseous fuel may be recovered to the fuel tank when the engine is restarted.

Therefore, according to the present invention, the vapor existing in the high pressure fuel pump may be collected and recovered to the fuel tank when the engine is turned off, thereby improving restartability.

Referring again to FIGS. 2 to 4, an exhaust-side check valve 28 coupled to the exhaust port 22 and an intake-side check valve 29 connected to the spill valve 26 to supply the fuel introduced into the body 20 to the exhaust-side check valve 28 while preventing the fuel from flowing back may be provided inside the body 20.

In addition, the intake port 21, the exhaust port 22, and the recovery port 23 may be provided with an exhaust opening, an intake opening, and a recovery opening, respectively.

The spill valve 26 may include a core 31 through which the magnetic flux flows, a sleeve 32 coupled to one side of the core 31, a casing 33 coupled to one side of the sleeve 32, a plunger 34 configured to reciprocate a needle 35 by power applied from an inside of the casing 33, and a spring 36 for providing restoring force to the needle 35.

A bobbin 37 may be installed at an outer portion of the core 31, a coil 38 may be wound around the bobbin 37, and a housing 39 may be coupled to an outer portion of the bobbin 37.

In the present embodiment, a coating layer coated with a coating material may be formed on an outer surface of the plunger 34, which performs the reciprocating motion, to prevent the plunger from being worn due to the characteristics of the LPG fuel having the low lubrication property.

Therefore, the present invention can prevent main components, especially the plunger from being worn due to the characteristics of the LPG fuel when the high pressure fuel pump is driven.

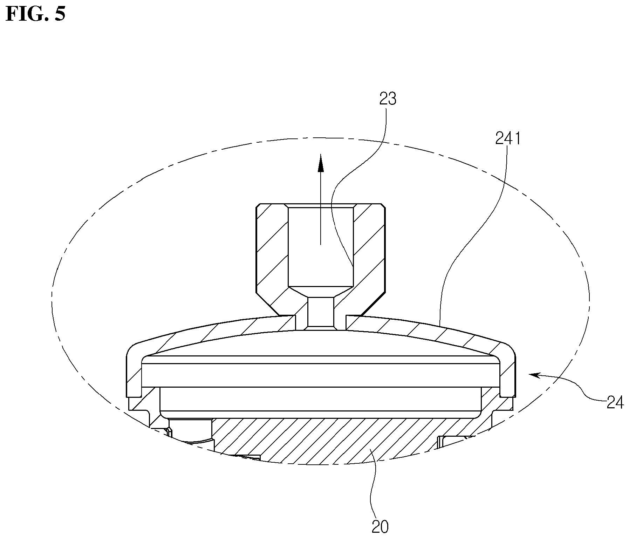

FIG. 5 is a partially enlarged sectional view of the high pressure fuel pump according to a comparative example.

As shown in FIG. 5, the high pressure fuel pump 14 according to the comparative example may have a configuration similar to the configuration of the high pressure fuel pump 20 according to the embodiment described with reference to FIGS. 2 to 4, except that the recovery port 23 is formed on the upper surface of the cover 24.

Therefore, the cover 24 may have a dome shape in which a central portion of the upper surface of the cover 24 formed with the recovery port 23 is convex upward, and the upper surface of the cover 24 may be formed as an inclined surface 241 inclined downward in the outward direction from the center thereof.

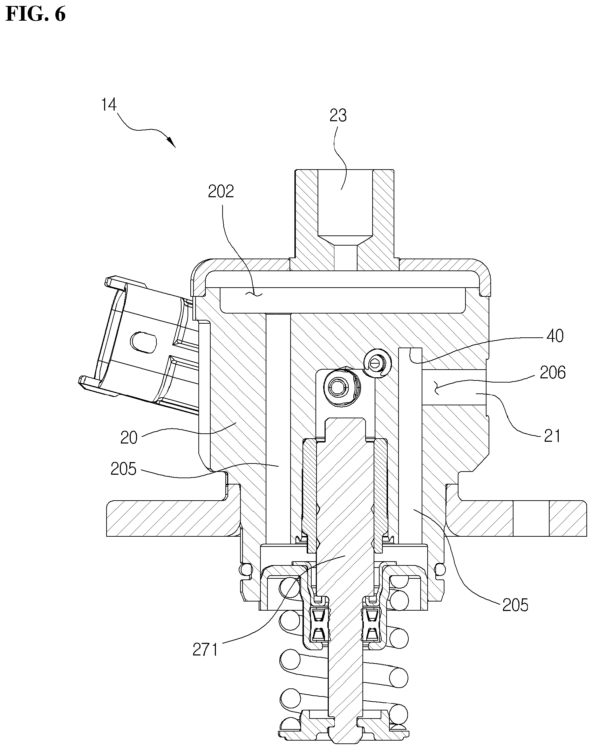

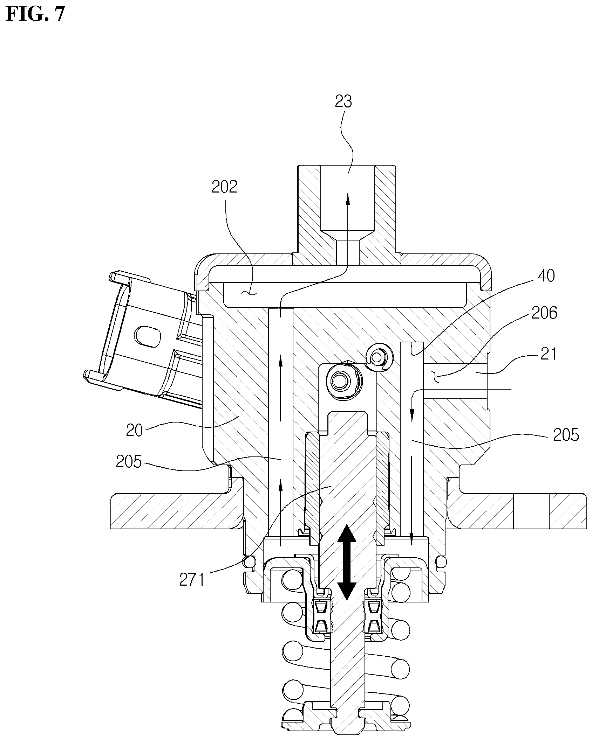

Meanwhile, FIG. 6 is a sectional view of the high pressure fuel pump shown in FIG. 5, and FIG. 7 is a view showing an operational state of the high pressure fuel pump shown in FIG. 6.

As described above reference to FIG. 10, in the conventional high pressure fuel pump 100, the low pressure fuel supplied to the fuel recovery line 122 via the low pressure portion 120 provided at the upper portion of the body 110 may cool the piston 130 by passing through a pair of cooling passages 112 connected to upper and lower portions of the high pressure fuel pump 100 through the volume change of the piston 130 generated when the high pressure fuel pump 100 is driven and the piston 130 moves up and down.

However, the conventional high pressure fuel pump 100 changes the flow rate of fuel in association with the change in driving RPM of the high pressure fuel pump 100 in order to cool the piston 130, thereby affecting the cooling rate of the piston 130, which may cause a problem.

In order to solve the above problem, the low pressure fuel supplied from the fuel tank may be circulated through the cooling passage provided inside the high pressure fuel pump at a constant pressure and a constant flow rate to cool the piston of the high pressure fuel pump at a constant rate always.

In detail, as shown in FIGS. 6 and 7, the high pressure fuel pump 14 according to the present invention may include a blocking wall 40 for blocking an upper end of a cooling passage 205 adjacent to the intake port 21 from the low pressure portion 202.

The blocking wall 40 may be integrally formed with the body 200 when the high pressure fuel pump 14 is manufactured, or may seal the upper end of the cooling passage 205 by normal welding, pressing or the like to maintain the airtightness of the cooling passage 205 and the low pressure portion 202 such that the blocking wall 40 can be applied to another high pressure fuel pump 14 that has been already manufactured.

Alternatively, the cooling passage 205 may be sealed by welding or the like after inserting a conventional sealing cap or a conventional sealing rod into the cooling passage 205.

However, in order to improve workability, it is desirable to form the blocking wall 40 integrally with the body 20 when the high pressure fuel pump is manufactured.

As the blocking wall 40 formed as described above may block the upper end of the cooling passage 205, the connection structure between the cooling passage 112 and the low pressure portion 120 in the high pressure fuel pump 100 according to the related art is modified and this is one of the technical configurations for circulating the low pressure fuel.

In addition, a connection passage 206 may be provided between the intake port 21 and the cooling passage 205 which is blocked from the low pressure portion 202 by the blocking wall 40.

In other words, according to the configuration of the related art as shown in FIG. 10, the low pressure fuel introduced through the intake port 114 is directly supplied to the low pressure portion 120 to cool the piston 130 by passing through the cooling passages 112 connected to the upper and lower portions of the high pressure fuel pump 100 through the volume change of the piston 130 generated when the high pressure fuel pump 100 is driven and the piston 130 moves up and down, so that the cooling efficiency is degraded.

In contrast, according to the present invention, the low pressure fuel introduced through the blocking wall formed in the cooling passage and the connection passage formed between the cooling passage and the intake port may not be directly supplied to the low pressure portion, but circulated through the cooling passage, so that the high cooling efficiency may be achieved with respect to the heat generated when the piston moves up and down.

That is, according to the present invention, the low pressure fuel flowing into the intake port may be introduced into the low pressure portion and the cooling passage having a closed upper end through the connection passage, and then circulated to the low pressure portion through another cooling passage surrounding the piston, so that the heat exchange may occur by the low pressure fuel having the low temperature, thereby cooling the body provided therein with the piston. As a result, heat generated from the piston may be cooled so that the piston may be cooled.

In particular, according to the present invention, the cooling efficiency of the piston may be further increased by continuously circulating the low temperature fuel to the low pressure portion through the connection passage and the cooling passage.

In this manner, the present invention may increase the cooling efficiency of the piston by circulating the low pressure fuel inside the body of the high pressure fuel pump with a simple technical configuration, other than a complicated technical configuration, so that the cooling efficiency for the piston may not be affected even when the flow rate of fuel is changed according to the driving RPM of the high pressure fuel pump, thereby ensuring the high reliability due to the smooth operation of the piston.

Meanwhile, the spill valve 26 may be coupled to the connection passage 206 such that a portion of the low pressure fuel flows into the cooling passage 205 at a constant pressure and a constant flow rate.

In other words, the low pressure fuel flowing into the cooling passage through the connection passage may be constantly introduced when the high pressure fuel pump is driven or operated and even when the low pressure fuel supplied from the fuel tank has an abnormal pressure, so that a constant cooling efficiency may be achieved and the higher reliability may be ensured.

Meanwhile, although the present invention has been described with the configuration in which a damper portion for reducing pulsation of the fuel is omitted, the present invention may be modified such that the damper portion can be applied to the high pressure fuel pump 14.

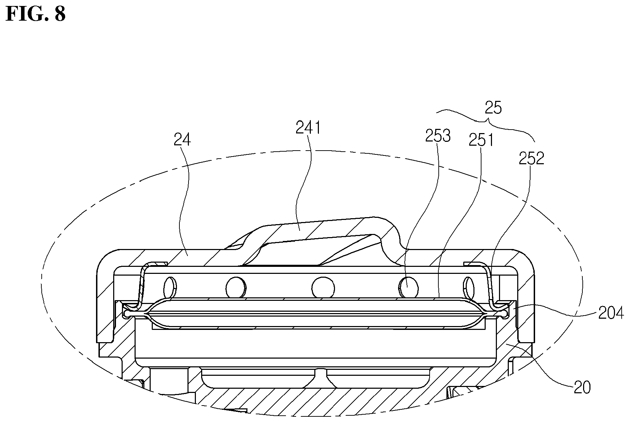

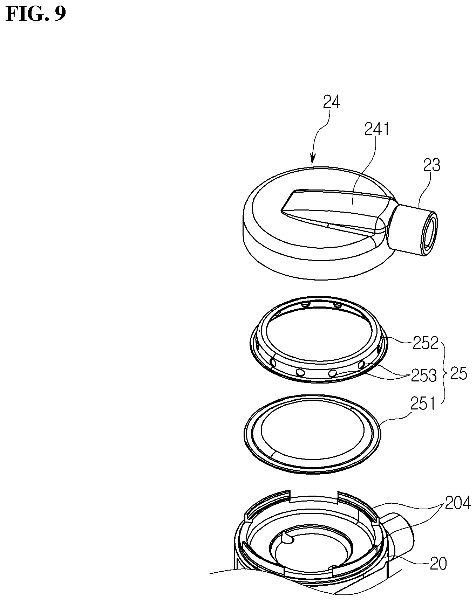

FIG. 8 is a sectional view of a cover and a damper portion of a high pressure fuel pump, and FIG. 9 is an exploded perspective view of the cover and the damper portion shown in FIG. 8.

As shown in FIGS. 8 and 9, the high pressure fuel pump 14 may include a damper portion 25 coupled to an upper portion of a body 20 to reduce pulsation of the fuel.

The cover 24 may be formed in a cylindrical shape with a lower surface opened so that a space for installing the damper portion 25 may be provided in the cover 24, and an edge portion of the cover 24 may be coupled to a plurality of coupling ribs 204 provided at an upper surface of the body 20.

The damper portion 25 may include a damper 251 having a plurality of valleys formed on an outer surface of the damper portion 25 and an upper guide 252 coupled to an upper portion of the damper 251 to fix the damper 251 to an upper surface of the body.

A plurality of delivery holes 253 may be formed in the upper guide 252 to deliver the fuel of the low pressure portion 202 to the damper 251.

Flanges may be provided on outer peripheral surfaces of the damper 251 and the upper guide 252, respectively, and each flange may be press-fitted between the plurality of coupling ribs provided on the upper surface of the edge of the body 20.

As described above, the upper surface of the cover 24 is configured as an inclined surface 241 inclined downward in a direction opposite to the recovery port, and the gaseous fuel may be collected in an upper portion of an inner space of the cover 24 along the inclined surface 241.

As described above, when the damper portion is provided on the upper portion of the body, the upper surface of the cover is configured as an inclined surface to collect the gaseous fuel, which is vaporized by the heat of the engine, in the cover, and the collected gaseous fuel may be recovered to the fuel tank when the engine is restarted, so that the vapor inside the high pressure fuel pump may be easily eliminated.

## Claims

1. A high pressure fuel pump (14) for LPG fuel comprising:
a body (20) formed at a lateral side thereof with an intake port (21) and an exhaust port (22), and provided therein with a pressing device (27) configured to press a portion of fuel, which is supplied through the intake port (21), at a high pressure;
a spill valve (26) coupled to one side of the body (20) to control a supply flow rate and exhaust pressure of the fuel; and
a cover (24) coupled to an upper portion of the body (20) and having a recovery port (23) for recovering a portion of the fuel supplied into the body (20) to a fuel tank (11),
wherein the cover (24) collects gaseous fuel vaporized by heat of an engine when the engine is turned off after driving, and has a dome shape which is convex upward,
**characterized in that**
an upper surface of the cover (24) is configured as an inclined surface inclined downward in a direction opposite to the recovery port (23) and the recovery port (23) is formed at a lateral side of the cover (24),
wherein the inclined surface is inclined downward in an outward direction from the recovery port (23)
wherein the gaseous fuel in an inner space of the cover (24) is moved along the inclined surface, to recover the gaseous fuel to the fuel tank (11) through the recovery port (23) when the engine is restarted.

2. The high pressure fuel pump (14) of claim 1, further comprising a damper portion (25) provided at an upper portion of the body (20) to reduce pulsation of the fuel,
wherein the cover (24) has a cylindrical shape with a lower surface opened to provide a space in which the damper portion (25) is installed.

3. The high pressure fuel pump (14) of one of claims 1 to 2, wherein a pair of cooling passages (205) are formed in the body (20), in which the fuel introduced through the intake port (21) is moved to a low pressure portion (202) formed inside the cover (24) through the cooling passages (205) to cool a piston (271) before the fuel is pressurized at high pressure,
a blocking wall (40) is formed at an upper end of one of the pair of cooling passages (205) adjacent to the intake port (21) to block the fuel introduced through the intake port (21) such that the fuel is not transferred to the low pressure portion (202), and
a connection passage (206) is formed between the intake port (21) and the cooling passage (205) in which the blocking wall (40) is formed.

4. The high pressure fuel pump (14) of claim 3, wherein the blocking wall (40) is formed integrally with the body (20), or configured to seal an upper end of the cooling passage (205) such that the cooling passage (205) and the low pressure portion (202) have airtightness.

5. The high pressure fuel pump (14) of one of claims 1 to 4, wherein the spill valve (26) includes:
a core (31) through which a magnetic flux flows;
a sleeve (32) coupled to one side of the core (31);
a casing (33) coupled to one side of the sleeve (32);
a plunger (34) configured to reciprocate a needle (35) by power applied from an inside of the casing (33);
a spring (36) configured to apply restoring force to the needle (35); and
a bobbin (37) installed outside the core (31), in which a coil (38) is wound on an outer peripheral surface of the bobbin (37),
wherein an outer surface of the plunger (34) is coated with a coating material to prevent the plunger (34) from being worn during a reciprocating motion.

## Patentansprüche

1. Eine Hochdruck-Kraftstoffpumpe (14) für LPG-Kraftstoff, umfassend:
einen Körper (20), der an einer lateralen Seite desselben mit einer Einlassöffnung (21) und einer Auslassöffnung (22) ausgebildet und darin mit einer Pressvorrichtung (27) versehen ist, die so konfiguriert ist, dass sie einen Teil des Kraftstoffs, der durch die Einlassöffnung (21) zugeführt wird, mit einem hohen Druck presst;
ein Überströmventil (26), das mit einer Seite des Körpers (20) gekoppelt ist, um eine Zufuhrflussrate und einen Auslassdruck des Kraftstoffs zu steuern; und
eine Abdeckung (24), die mit einem oberen Teil des Körpers (20) verbunden ist und eine Rückgewinnungsöffnung (23) zur Rückgewinnung eines Teils des in den Körper (20) zugeführten Kraftstoffs zu einem Kraftstofftank (11) aufweist,
wobei die Abdeckung (24) gasförmigen und durch die Wärme eines Motors verdampften Kraftstoff auffängt, wenn der Motor nach dem Fahren abgestellt ist, und eine nach oben konvexe Kuppelform aufweist,
**dadurch gekennzeichnet, dass** eine obere Oberfläche der Abdeckung (24) als eine geneigte Oberfläche ausgebildet ist, die in einer Richtung entgegengesetzt zu der Rückgewinnungsöffnung (23) nach unten geneigt ist, und die Rückgewinnungsöffnung (23) an einer lateralen Seite der Abdeckung (24) ausgebildet ist,
wobei die geneigte Oberfläche von der Rückgewinnungsöffnung (23) in einer Richtung nach außen nach unten geneigt ist,
wobei der gasförmige Kraftstoff in einem Innenraum der Abdeckung (24) entlang der geneigten Oberfläche bewegt wird, um den gasförmigen Kraftstoff durch die Rückgewinnungsöffnung (23) in den Kraftstofftank (11) zurückzuholen, wenn der Motor neu gestartet wird.

2. Die Hochdruck-Kraftstoffpumpe (14) nach Anspruch 1, die ferner einen Dämpferabschnitt (25) umfasst, der an einem oberen Abschnitt des Körpers (20) vorgesehen ist, um die Pulsation des Kraftstoffs zu verringern,
wobei die Abdeckung (24) eine zylindrische Form mit einer unteren Oberfläche aufweist, die geöffnet ist, um einen Raum zu schaffen, in dem der Dämpferabschnitt (25) installiert ist.

3. Die Hochdruck-Kraftstoffpumpe (14) nach einem der Ansprüche 1 bis 2, wobei in dem Körper (20) ein Paar Kühlkanäle (205) ausgebildet sind, in denen der durch die Einlassöffnung (21) eingeleitete Kraftstoff durch die Kühlkanäle (205) zu einem innerhalb der Abdeckung (24) ausgebildeten Niederdruckbereich (202) bewegt wird, um einen Kolben (271) zu kühlen, bevor der Kraftstoff mit Hochdruck beaufschlagt wird,
eine Sperrwand (40) an einem oberen Ende eines der Paare von Kühlkanälen (205) angrenzend an die Einlassöffnung (21) ausgebildet ist, um den durch die Einlassöffnung (21) eingeleiteten Kraftstoff zu sperren, so dass der Kraftstoff nicht zu dem Niederdruckbereich (202) geleitet wird, und
ein Verbindungskanal (206) zwischen der Einlassöffnung (21) und dem Kühlkanal (205) ausgebildet ist, in dem die Sperrwand (40) ausgebildet ist.

4. Die Hochdruck-Kraftstoffpumpe (14) nach Anspruch 3, wobei die Sperrwand (40) einstückig mit dem Körper (20) ausgebildet ist oder so konfiguriert ist, dass sie ein oberes Ende des Kühlkanals (205) abdichtet, so dass der Kühlkanal (205) und der Niederdruckabschnitt (202) luftdicht sind.

5. Die Hochdruck-Kraftstoffpumpe (14) nach einem der Ansprüche 1 bis 4, wobei das Überströmventil (26) folgendes umfasst:
einen Kern (31), der von einem Magnetfluss durchflossen wird;
eine Hülse (32), die mit einer Seite des Kerns (31) verbunden ist;
ein Gehäuse (33), das mit einer Seite der Hülse (32) verbunden ist;
einen Stößel (34), der so konfiguriert ist, dass er eine Nadel (35) durch eine von der Innenseite des Gehäuses (33) zugeführte Kraft hin- und herbewegt;
eine Feder (36), die so gestaltet ist, dass sie eine Rückstellkraft auf die Nadel (35) ausübt; und
einen Spulenkörper (37), der außerhalb des Kerns (31) installiert ist und bei dem eine Spule (38) auf eine äußere periphere Oberfläche des Spulenkörpers (37) gewickelt ist,
wobei eine äußere Oberfläche des Stößels (34) mit einem Beschichtungsmaterial beschichtet ist, um zu verhindern, dass der Stößel (34) während einer Hin- und Herbewegung verschleißt.

## Revendications

1. Une pompe à carburant haute pression (14) pour du carburant GPL comprenant :
un corps (20) formé d'un côté latéral de celui-ci avec un orifice d'admission (21) et un orifice d'échappement (22), et pourvu à l'intérieur d'un dispositif de pression (27) configuré pour exercer une pression sur une portion de carburant, qui est fourni à travers l'orifice d'admission (21), à une haute pression ;
une soupape de décharge (26) couplée à un côté du corps (20) pour commander un débit d'alimentation et une pression d'échappement du carburant ; et
un couvercle (24) couplé à une portion supérieure du corps (20) et ayant un orifice de récupération (23) pour récupérer une portion du carburant fourni dans le corps (20) vers un réservoir de carburant (11),
dans laquelle le couvercle (24) collecte du carburant gazeux vaporisé par la chaleur d'un moteur lorsque le moteur est éteint après la conduite, et a une forme de dôme qui est convexe vers le haut,
**caractérisée en ce qu'**une surface supérieure du couvercle (24) est configurée sous forme de surface inclinée vers le bas dans une direction opposée à l'orifice de récupération (23) et l'orifice de récupération (23) est formé d'un côté latéral du couvercle (24),
dans laquelle la surface inclinée est inclinée vers le bas dans une direction vers l'extérieur depuis l'orifice de récupération (23),
dans laquelle le carburant gazeux dans un espace interne du couvercle (24) est déplacé le long de la surface inclinée, pour récupérer le carburant gazeux vers le réservoir de carburant (11) à travers l'orifice de récupération (23) lorsque le moteur est redémarré.

2. La pompe à carburant haute pression (14) selon la revendication 1, comprenant en outre une portion d'amortissement (25) prévue au niveau d'une portion supérieure du corps (20) pour réduire une pulsation du carburant,
dans laquelle le couvercle (24) a une forme cylindrique avec une surface inférieure ouverte pour fournir un espace dans lequel la portion d'amortissement (25) est installée.

3. La pompe à carburant haute pression (14) selon l'une des revendications 1 et 2, dans laquelle une paire de passages de refroidissement (205) sont formés dans le corps (20), dans lequel le carburant introduit à travers l'orifice d'admission (21) est déplacé vers une portion basse pression (202) formée à l'intérieur du couvercle (24) à travers les passages de refroidissement (205) pour refroidir un piston (271) avant pressurisation du carburant à haute pression,
une paroi de blocage (40) est formée à une extrémité supérieure de l'un de la paire de passages de refroidissement (205) adjacent à l'orifice d'admission (21) pour bloquer le carburant introduit à travers l'orifice d'admission (21) de sorte que le carburant ne soit pas transféré vers la portion basse pression (202), et
un passage de raccordement (206) est formé entre l'orifice d'admission (21) et le passage de refroidissement (205) dans lequel la paroi de blocage (40) est formée.

4. La pompe à carburant haute pression (14) selon la revendication 3, dans laquelle la paroi de blocage (40) est formée d'un seul tenant avec le corps (20), ou configurée pour assurer l'étanchéité d'une extrémité supérieure du passage de refroidissement (205), de sorte que le passage de refroidissement (205) et la portion basse pression (202) aient une étanchéité à l'air.

5. La pompe à carburant haute pression (14) selon l'une des revendications 1 à 4, dans laquelle la soupape de décharge (26) comporte :
un noyau (31) à travers lequel s'écoule un flux magnétique ;
un manchon (32) couplé à un côté du noyau (31) ;
un carter (33) couplé à un côté du manchon (32) ;
un plongeur (34) configuré pour animer un pointeau (35) d'un mouvement de va-et-vient par une puissance appliquée depuis un intérieur du carter (33) ;
un ressort (36) configuré pour appliquer une force de rappel au pointeau (35) ; et
un aggloméré (37) installé à l'extérieur du noyau (31), une bobine (38) étant enroulée sur une surface périphérique externe de l'aggloméré (37),
dans laquelle une surface externe du plongeur (34) est revêtue d'un matériau de revêtement pour empêcher l'usure du plongeur (34) pendant un mouvement de va-et-vient.
